**Europäisches Patentamt**

**European Patent Office**

**Office européen des brevets**

(19)

(11) Veröffentlichungsnummer: **0 234 253**
**B1**

(12)

# EUROPÄISCHE PATENTSCHRIFT

(45) Veröffentlichungstag der Patentschrift:
**01.08.90**

(21) Anmeldenummer: **87100647.4**

(22) Anmeldetag: **19.01.87**

(51) Int. Cl.⁵: **G11B 23/04**, G11B 23/50

(54) **Bandcassette mit steckbarem Bandabstreifer.**

(30) Priorität: **30.01.86 DE 3602690**

(43) Veröffentlichungstag der Anmeldung:
**02.09.87 Patentblatt 87/36**

(45) Bekanntmachung des Hinweises auf die Patenterteilung:
**01.08.90 Patentblatt 90/31**

(84) Benannte Vertragsstaaten:
**DE FR GB IT NL**

(56) Entgegenhaltungen:
**EP-A- 0 085 442**
**DE-A- 3 216 819**
**DE-A- 3 443 995**
**DE-A- 3 602 272**

(73) Patentinhaber: **Agfa-Gevaert AG,**
**D-5090 Leverkusen 1(DE)**

(72) Erfinder: **Brunner, Hubert, Mühlgasse 4a,**
**D-8911 Weil(DE)**
Erfinder: **Zeroni, Ludwig, Nelkenstrasse 40,**
**D-8012 Ottobrunn(DE)**
Erfinder: **Pertzsch, Albert, Dipl.-Ing., Leutstettener**
**Strasse 29, D-8000 München 71(DE)**

## Beschreibung

Die Erfindung betrifft eine Bandcassette mit einem steckbaren Bandabstreifer, mit dessen Hilfe das Magnetband gegen einen Umlenkstift gedrückt wird.

Eine Funktion des Bandabstreifers besteht darin, zu verhindern, daß das Magnetband, das zwischen zwei in der Cassette befindlichen Spulen geführt wird, sich lockert, wobei in diesem Fall derjenige Bandteil, der sich längs der Öffnung des Gehäuses der Bandcassette erstreckt, zu stark durchhängt. Dies kann beispielsweise geschehen, wenn die Cassette dem Aufnahme- oder Wiedergabegerät entnommen wird oder transportiert wird. Zwar haben die meisten Bandcassetten, speziell die Video-Cassetten, für beide Spulen einen in den Spulenflansch eingreifenden Sperrklinkenmechanismus, der ebenfalls ein Lockerwerden des Bandes verhindert, jedoch wird diese Sicherung beim Einsetzen der Cassette in ein Aufnahme- oder Wiedergabegerät automatisch gelöst. Wird dann ein Teil des Bandes herausgezogen, was für einen einwandfreien Funktionsablauf erforderlich ist, so kann, falls das Band vorher zu locker war, der Vorgang des Herausziehens des Bandes nicht mehr einwandfrei erfolgen, was zu Beschädigungen des Bandes oder zu Transportstörungen führt.

Eine andere Funktion des Bandabstreifers ist die, während des Transportvorganges des Bandes in der Cassette den Bandlauf zu beruhigen.

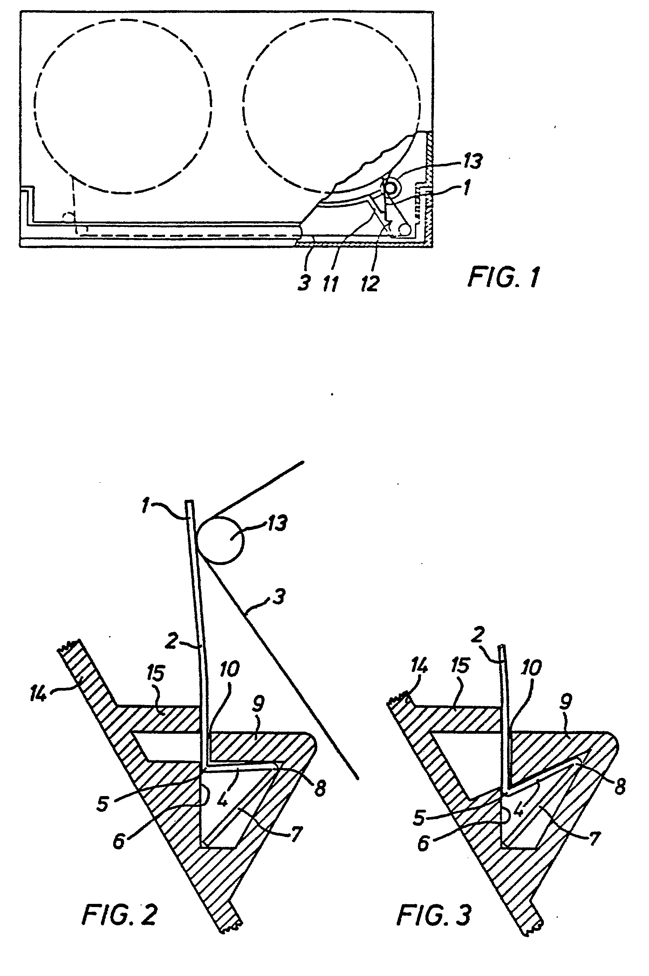

In der Figur 1 wird eine handelsübliche Video-Cassette gezeigt, die aus einem Gehäuseoberteil und einem -unterteil zusammengesetzt ist. Das Magnetband 3 wird zwischen zwei planparallel angeordneten Spulen auf- und abgewickelt. Bevor das Magnetband an der Vorderseite des Gehäuses herausgeführt wird, wird es mittels eines elastischen Bandabstreifers 1 gegen einen Umlenkstift 13 gedrückt. Am anderen Ende wird der Bandabstreifer an einer im Gehäuseunterteil vertikal angeordneten Platte 11 mittels Klebstoff oder doppelseitigem Klebeband befestigt. Eine an der Platte angespritzte Nase 12 dient dazu, das hintere Ende des Bandabstreifers festzulegen. Wegen des beengten Raumes ist ein korrektes Ankleben des Bandabstreifers erschwert. Außerdem kann Klebstoff beim Ankleben an der Verbindungsstelle herausgedrückt und auf das Magnetband übertragen werden, was an diesen Stellen zu Störungen der Magnetbandaufzeichnung führt. Ferner kann sich der Bandabstreifer durch Alterungserscheinungen des Klebstoffs ablösen und dadurch seine Funktion verloren gehen.

Um diese Nachteile zu vermeiden, wurden steckbare Bandabstreifer entwickelt. So ist in DE-OS 29 30 446 der Bandabstreifer am hinteren Ende mit mehreren übereinander liegenden Schlitzen versehen, die alternierend gebogen sind. Abgesehen davon, daß zum Aufstecken des Bandabstreifers ein gesonderter runder Stift in das Gehäuseteil eingesetzt werden muß, ist die Herstellung des Bandabstreifers selbst relativ aufwendig. Die geschlitzten Bereiche des Bandabstreifers müssen beim Aufstecken zusätzlich gespreizt werden, wobei zu beachten ist, daß der Durchmesser der geschlitzten Bereiche so gewählt werden muß, daß diese Bereiche straff auf dem runden Stift sitzen. In DE-OS 31 05 633 ist der gleiche Bandabstreifer wie in der vorher erwähnten Patentschrift beschrieben, nur mit dem Unterschied, daß das Kunststoffmaterial aus einem kohlenstoffhaltigen Polyethylen besteht. Ebenfalls beschreibt DE-OS 32 16 819 einen steckbaren Bandabstreifer. Zu seiner Befestigung bedarf es einer besonders geformten Platte mit Stegen (7 a, b, c, d, e), wodurch der Bandabstreifer nach dem Einsetzen eine gekrümmte Bahn erfährt. Eine Nase 7 f dient als Anschlag, der die Verschiebung des Bandabstreifers in horizontaler Richtung verhindert. Dies erfordert eine Ausnehmung 4 in dem Bandabstreifer, die in eine Querrippe der Nase greift. Der Vorgang des Einsetzens des Bandabstreifers erfordert nach wie vor besondere Präzision, auch die Konstruktion der Platte selbst bedingt einen umfangreicheren Umbau des Spritzwerkzeugs für die Herstellung des Gehäuseunterteils.

Die EP 0 133 370 beschreibt eine Bandkassette mit einem Bandabstreifer, bestehend aus einem flexiblen Streifen, dessen eines Ende so umgefaltet wird, daß sich ein spitzer Winkel zum anderen Ende ergibt, das beschichtet ist und das Magnetband federnd an den Umlenkstift drückt. Das umgefaltete Ende wird in ein gehäuseseitiges Halteteil eingesteckt und ist damit fixiert.

Die EP 0 128 271 beschreibt einen Bandabstreifer, welcher sich mit einem Ende sowie mit dem Ende einer unter spitzem Winkel abstehenden ausgestanzten Lasche im Bandkassettengehäuse abstützt.

In dem DE-GM 84 35 276 wird eine Bandkassette mit einem Bandabstreifer beschrieben, der mit einem verlängerten Schenkel an einer Platte anliegt, während das umgeknickte Ende in einem zylindrisch erweiterten Spalt steckt. In dem DE-GM 85 15 523 bildet ein mindestens 2fach umgeknicktes Kunststoffplättchen einen Bandabstreifer, der als Dreieck ausgebildet und so fixiert ist, daß eine Seite federnd gegen das über den Umlenkstift laufende Magnetband drückt.

Die vorstehend beschriebenen steckbaren Bandabstreifer sind entweder ungenügend fixiert oder aber nur mit Schwierigkeiten in Montageautomaten in die Cassette einzuführen oder aber sie verlieren konstruktionsbedingt während einer längeren Gebrauchsdauer ihre andrückende Funktion.

Aufgabe der Erfindung war es, einen steckbaren Bandabstreifer zu finden, der einfach herstellbar ist, einen geringen Änderungsaufwand beim Gehäuseteil erfordert, ohne Komplikationen einsetzbar ist, zuverlässig fixiert ist und auch bei längerem Gebrauch seine Funktion beibehält.

Die Aufgabe wurde erfindungsgemäß gelöst durch eine Bandcassette mit den in kennzeichnenden Teil des Anspruchs 1 aufgeführten Merkmalen. Details der Erfindung sind in den Unteransprüchen, der Beschreibung und den Zeichnungen wiedergegeben.

Im folgenden wird die Erfindung anhand von Zeichnungen näher erläutert, und zwar zeigen

Figur 1 eine übliche Video-Cassette, teilweise aufgebrochen,

Figur 2 und 3 Draufsichten auf einen Teil des Gehäuseunterteils einer Video-Cassette mit zwei Ausführungsformen des erfindungsgemäßen Bandabstreifers und der ihn aufnehmenden Gehäuseteile.

Figur 1 wurde bereits in der Beschreibungseinleitung diskutiert, Figur 2 stellt den Teil aus Figur 1 dar, in dem das Gehäuseoberteil aufgebrochen ist, jedoch mit den erfindungsgemäßen Abänderungen. Statt der Platte 11 mit Nase 12 ist erfindungsgemäß als Befestigungselement für den Bandabstreifer ein Gehäuse 14 vorgesehen, welches Pfosten beziehungsweise Wände 15, 9 und 6, enthält. Diese sind so in der Lage gegeneinander versetzt, daß ein enger Spalt 10 entsteht, in dem der untere Teil des verlängerten Schenkels 2 des Bandabstreifers 1 steckt. Somit wird der Schenkel 2 durch die Pfosten 9 und 15 und die Wand 6 fixiert. Über die Knickstelle 5 setzt sich der Bandabstreifer annähernd rechtwinkelig zu Schenkel 2 in dem mittleren Schenkel 4 fort. Dessen anderes Ende 8 bildet eine Knick- oder Biegestelle, die in dem durch den Pfosten 9 gegebenen Winkel steckt. Nach dieser zweiten Knickstelle folgt der dritte Schenkel 7, dessen freies Ende in einer Ecke der Wand 6 festsitzt. Alternativ dazu können, wie in Figur 3 dargestellt, die Knickstelle 5 sowie die Innenseite des Pfostens 9 so ausgeprägt sein, daß die Schenkel 2 und 4 einen spitzen Winkel zueinander bilden. Auch in diesem Fall wird der untere Teil des Schenkels 2 durch die Pfosten 9 und 15 sowie die Wand 6 fixiert.

Der elastische Bandabstreifer wird aus einem rechteckigen Streifen gewonnen. Er besteht aus einem elastischen Kunststoffmaterial, etwa Polyethylenterephthalat, das an der Kontaktfläche mit dem Magnetband mit einem Material geringer Reibung, zum Beispiel Polytetrafluorethylen, beschichtet oder mit diesem Material in Masse pigmentiert sein kann. Die Dicke des Bandabstreifers beträgt 50 - 200 µm, vorzugsweise 100 - 150 µm.

Die hauptsächlichen Vorteile der erfindungsgemäßen Anordnung gegenüber den bekannten und eingangs beschriebenen Ausführungsformen werden wie folgt zusammengefaßt:
- der einfache Aufbau des Bandabstreifers ermöglicht, diesen in Fertigungsautomaten, in denen die Video-Cassette zusammengesetzt wird, in einem Arbeitsgang aus einem vorbereiteten bandförmigen Kunststoffstreifen auszustanzen, umzubiegen und in das beschriebene Befestigungselement einzustecken, in dem er durch seine mehrfache Fixierung unverrückbar festsitzt.
- Das oben beschriebene Befestigungselement für den Bandabstreifer ist so aufgebaut, daß es ohne Schwierigkeiten in einem Spritzwerkzeug entformbar ist, wobei die erforderliche Änderung am Gehäuseunterteil in jedes Spritzwerkzeug für eine herkömmliche Video-Cassette nachträglich eingebaut werden kann, jedenfalls ist eine Umkonstruktion des gesamten Spritzwerkzeuges für das Gehäuseunterteil nicht erforderlich.

**Patentansprüche**

1. Bandkassette mit streckbarem flexiblen Bandabstreifer, der mit einem ersten Schenkel (2) gegen das über einen Umlenkstift laufende Magnetband drückt und der sich mit einer Knickstelle und mindestens einem zweiten Schenkel im Bandkassettengehäuse abstützt, dadurch gekennzeichnet, daß der Bandabstreifer (1) durch zwei Knickstellen (5, 8) dreischenkelig ausgebildet ist, wobei der innere Teil des ersten Schenkels (2) in einem Spalt (10) steckt, der in dem Gehäuse (14) dadurch entstanden ist, daß Pfosten (15 und 9) sowie ein Wandteil (6) gegeneinander versetzt sind, wobei der mittlere Schenkel (4) mit seiner ersten Knickstelle (5) am Wandteil (6) und mit seinem geraden Teil und seiner weiteren Knickstelle (8) ganz oder teilweise an dem Pfosten (9) anliegt und wobei sich das freie Ende des dritten Schenkels (7) in einer Ecke der Wand (6) abstützt.

2. Bandkassette nach Anspruch 1, dadurch gekennzeichnet, daß die erste Knickstelle (5) einen annähernd rechten Winkel bildet.

3. Bandkassette nach Anspruch 1, dadurch gekennzeichnet, daß die erste Knickstelle (5) einen spitzen Winkel bildet.

**Claims**

1. A tape cassette comprising an insertable tape stripper of which a first leg (2) presses against the magnetic tape as it passes over a guide pin and which is supported in the tape cassette housing through a knee and at least a second leg, characterized in that the tape stripper (1) is divided by two knees (5, 8) into three legs, the inner part of the first leg (2) fitting into a gap (10) formed in the housing (14) through the staggering of posts (15 and 9) and a wall part (6), the middle leg (4) bearing against the wall part (6) through its first knee (5) and partly or completely against the post (9) through its straight part and its other knee (8) and the free end of the third leg (7) being supported by a corner of the wall (6).

2. A tape cassette as claimed in claim 1, characterized in that the first knee (5) forms approximately a right angle.

3. A tape cassette as claimed in claim 1, characterized in that the first knee (5) forms an acute angle.

**Revendications**

1. Cassette de bande comportant un frotteur de bande flexible, enfichable, qui par un premier côté (2) presse contre la bande magnétique passant sur un doigt de renvoi, et qui, avec un point de pliage, et par au moins un deuxième côté, prend appui dans un boîtier de cassette de bande, caractérisée en ce que le frotteur de bande (1) présente trois côtés, du fait de deux points de pliage (5, 8), la partie intérieure du premier côté (2) passant dans une fente (10) qui est formée dans le boîtier (14) par le fait que des montants (15 et 9) ainsi qu'une partie de paroi (6) sont décalés les uns par rapport aux autres, le côté central (4) et son premier point de pliage (5) s'appliquant contre la partie de paroi (6) et, par sa partie droite et son autre point de pliage (8), s'appliquant, totalement ou partiellement, contre le montant (9), et l'extrémité libre du troisième côté (7) prenant appui dans un angle de la paroi (6).

2. Cassette de bande selon la revendication 1, caractérisée en ce que le premier point de pliage (5) forme un angle à peu près droit.

3. Cassette de bande selon la revendication 1, caractérisée en ce que le premier point de pliage (5) forme un angle aigu.

FIG. 1

FIG. 2

FIG. 3